# EUROPEAN PATENT APPLICATION

(11) **EP 4 742 028 A2**
(43) Date of publication of application: **13.05.2026**
(21) Application number: 26169552.2
(22) Date of filing: 31.03.2026
(51) Int. Cl.: G06F 3/14, G09G 5/12

(54) **SYSTEM ON CHIP SUPPORTING MULTI-SCREEN DISPLAY, SYNCHRONIZATION METHOD FOR MULTI-SCREEN DISPLAY, AND ELECTRONIC DEVICE**

(30) Priority: 30.10.2025 CN 202511575142
(71) Applicant: XG TECH PTE. LTD., Singapore 179098 (SG)
(72) Inventor: LIN, Tao, 179098 Singapore (SG); LI, Xinlei, 179098 Singapore (SG)
(74) Representative: Epping - Hermann - Fischer

(57) **Abstract**

A system on chip includes: a processor core configured to perform a write operation on a synchronization control register of a timing generator corresponding to a display screen performing multi-screen display, enable a display synchronization function of the timing generator, and divide the timing generator into a master timing generator or a slave timing generator; wherein the master timing generator is configured to generate a first timing synchronization signal, transmit the first timing synchronization signal to a display screen corresponding to the master timing generator, and transmit a vertical synchronization signal of the first timing synchronization signal to the slave timing generator; and the slave timing generator is configured to generate a second timing synchronization signal in response to the vertical synchronization signal transmitted by the master timing generator, and transmit the second timing synchronization signal to a display screen corresponding to the slave timing generator.

## Description

### FIELD OF THE PRESENT DISCLOSURE

The present disclosure relates to the technical field of intelligent driving technology, and in particular, to a system on chip supporting multi-screen display, a synchronization method for multi-screen display, and an electronic device.

### BACKGROUND OF THE PRETRANSMITTED DISCLOSURE

With the rapid development of intelligent driving technology, vehicle cockpit systems are evolving towards the trend of multi-screen, high interactivity and high immersion. At present, most mainstream intelligent cockpit chip architectures adopt a fusion architecture of dual operating systems of Android and QNX. To avoid the complexity and performance overhead caused by the transmission of timing synchronization signals across operating systems, intelligent cockpit chips mainly realize the display synchronization among multiple screens through a coordination mechanism at the software layer.

However, the display synchronization accuracy among multiple screens is affected by the coordination delay of the software layer. Especially in scenarios with high frame rate and multi-screen display (i.e., multiple display screens are spliced into one display screen), the display images among multiple display screens cannot be strictly synchronized due to the coordination delay of the software layer,, resulting in obvious misalignment or smear phenomenon in the human eye vision of multiple display screens, which seriously affects the visual experience. Therefore, there is an urgent need for a method capable of improving the display synchronization accuracy of multi-screen display.

### SUMMARY OF THE PRESENT DISCLOSURE

To solve the above technical problems, the present disclosure provides a system on chip supporting multi-screen display, a synchronization method for multi-screen display, and an electronic device to improve the display synchronization accuracy of multi-screen display.

According to an embodiment of a first aspect of the present disclosure, there is provided a system on chip supporting multi-screen display, including:
a processor core configured to perform a write operation on a synchronization control register of a timing generator corresponding to a display screen performing multi-screen display, to enable a display synchronization function of the timing generator, and divide the timing generator into a master timing generator and a slave timing generator; where
the master timing generator is configured to generate a first timing synchronization signal, transmit the first timing synchronization signal to a display screen corresponding to the master timing generator, and transmit a vertical synchronization signal of the first timing synchronization signal to the slave timing generator; and
the slave timing generator is configured to generate a second timing synchronization signal in response to the vertical synchronization signal transmitted by the master timing generator, and transmit the second timing synchronization signal to a display screen corresponding to the slave timing generator.

According to an embodiment of a second aspect of the present disclosure, there is provided a synchronization method for multi-screen display based on a system on chip, including:
performing, by a processor core, a write operation on a synchronization control register of a timing generator corresponding to a display screen performing multi-screen display, to enable a display synchronization function of the timing generator, and divide the timing generator into a master timing generator and a slave timing generator;
generating, by the master timing generator, a first timing synchronization signal, transmitting the first timing synchronization signal to a display screen corresponding to the master timing generator, and transmitting a vertical synchronization signal of the first timing synchronization signal to the slave timing generator; and
generating, by the slave timing generator, a second timing synchronization signal in response to the vertical synchronization signal transmitted by the master timing generator, and transmit the second timing synchronization signal to a display screen corresponding to the slave timing generator.

According to an embodiment of a third aspect of the present disclosure, there is provided an electronic device, including a display screen and the system on chip supporting multi-screen display provided according to the embodiment of the first aspect;
the display screen is configured to perform multi-screen display based on a first timing synchronization signal output from a master timing generator and a second timing synchronization signal output from a slave timing generator in the system on chip.

According to an embodiment of a fourth aspect of the present disclosure, there is provided a computer readable storage medium, storing a computer program, which, when executed by a processor, causes the processor to perform the synchronization method for multi-screen display based on a system on chip provided according to the embodiment of the second aspect.

According to an embodiment of a fifth aspect of the present disclosure, there is provided a computer program product, in which, when instructions are executed by a processor, causes the processor to perform the synchronization method for multi-screen display based on a system on chip provided according to the embodiment of the second aspect of the present disclosure.

According to the embodiments of the present disclosure, there are provided a system on chip supporting multi-screen display, a synchronization method for multi-screen display, and an electronic device. The system on chip supporting multi-screen display includes: a processor core configured to perform a write operation on a synchronization control register of a timing generator corresponding to a display screen performing multi-screen display, to enable a display synchronization function of the timing generator, and divide the timing generator into a master timing generator and a slave timing generator; wherein the master timing generator is configured to generate a first timing synchronization signal, transmit the first timing synchronization signal to a display screen corresponding to the master timing generator, and transmit a vertical synchronization signal of the first timing synchronization signal to the slave timing generator; and the slave timing generator is configured to generate a second timing synchronization signal in response to the vertical synchronization signal transmitted by the master timing generator, and transmit the second timing synchronization signal to a display screen corresponding to the slave timing generator. The processor core divides the timing generator corresponding to the display screen performing multi-screen display into a master timing generator and a slave timing generator. After receiving the vertical synchronization signal of the first timing synchronization signal generated by the master timing generator, the slave timing generator synchronously generates the second timing synchronization signal. As such, the master timing generator and the slave timing generator realize the synchronization of timing synchronization signals at the hardware layer across operating systems, so that the display synchronization accuracy between the display screens performing multi-screen display is no longer affected by the coordination delay of the software layer, thereby improving the display synchronization accuracy of multi-screen display, and enhancing the visual experience of users.

### BRIEF DESCRIPTION OF THE DRAWINGS

FIG. 1 is a structural schematic diagram of a system on chip supporting multi-screen display according to an exemplary embodiment of the present disclosure.
FIG. 2 is a schematic diagram of a timing synchronization signal according to an exemplary embodiment of the present disclosure.
FIG. 3 is a flow schematic diagram of a synchronization method for multi-screen display based on a system on chip according to an exemplary embodiment of the present disclosure.
FIG. 4 is a flow schematic diagram of a synchronization method for multi-screen display based on a system on chip according to another exemplary embodiment of the present disclosure.
FIG. 5 is a flow schematic diagram of a synchronization method for multi-screen display based on a system on chip according to another exemplary embodiment of the present disclosure.
FIG. 6 is a flow schematic diagram of a synchronization method for multi-screen display based on a system on chip according to another exemplary embodiment of the present disclosure.
FIG. 7 is a flow schematic diagram of a synchronization method for multi-screen display based on a system on chip according to another exemplary embodiment of the present disclosure.
FIG. 8 is a flow schematic diagram of a synchronization method for multi-screen display based on a system on chip according to another exemplary embodiment of the present disclosure.
FIG. 9 is a structural schematic diagram of a multi-screen display synchronization device based on a system on chip according to an exemplary embodiment of the present disclosure.
FIG. 10 is a structure diagram of an electronic device according to an exemplary embodiment of the present disclosure.

### DESCRIPTION OF THE EMBODIMENTS

To explain the present disclosure, exemplary embodiments of the present disclosure will be described in detail below with reference to the accompanying drawings. It is obvious that the described embodiments are only a part of the embodiments of the present disclosure, not all of the embodiments, and it should be understood that the present disclosure is not limited by the exemplary embodiments.

It should be noted that: the relative arrangement of components and steps, numerical expressions and values set forth in these embodiments do not limit the scope of the present disclosure, unless specifically stated otherwise.

### Disclosure Overview

With the rapid development of intelligent driving technology, vehicle cockpit systems are evolving towards the trend of multi-screen, high interactivity and high immersion. At present, most mainstream intelligent cockpit chip architectures adopt a fusion architecture of dual operating systems of Android and QNX. To avoid the complexity and performance overhead caused by the transmission of timing synchronization signals across operating systems, intelligent cockpit chips mainly realize the display synchronization among multiple screens through a coordination mechanism at the software layer.

However, the display synchronization accuracy among multiple screens is affected by the coordination delay of the software layer. Especially in scenarios with high frame rate and multi-screen display (i.e., multiple display screens are spliced into one display screen), affected by the coordination delay of the software layer, the display images among multiple display screens cannot be strictly synchronized, resulting in obvious misalignment or smear phenomenon in the human eye vision of multiple display screens, which seriously affects the visual experience. Therefore, there is an urgent need for a method capable of improving the display synchronization accuracy of multi-screen display.

In the embodiment of the present disclosure, the system on chip supporting multi-screen display includes a processor core configured to perform a write operation on a synchronization control register of a timing generator corresponding to a display screen performing multi-screen display, to enable a display synchronization function of the timing generator, and divide the timing generator into a master timing generator and a slave timing generator. The master timing generator is configured to generate a first timing synchronization signal, transmit the first timing synchronization signal to a display screen corresponding to the master timing generator, and transmit a vertical synchronization signal of the first timing synchronization signal to the slave timing generator. And the slave timing generator is configured to generate a second timing synchronization signal in response to the vertical synchronization signal transmitted by the master timing generator, and transmit the second timing synchronization signal to a display screen corresponding to the slave timing generator. The processor core divides the timing generator corresponding to the display screen performing multi-screen display into the master timing generator and the slave timing generator. After receiving the vertical synchronization signal of the first timing synchronization signal generated by the master timing generator, the slave timing generator synchronously generates the second timing synchronization signal. As such, the master timing generator and the slave timing generator realize the synchronization of timing synchronization signals at the hardware layer across operating systems, so that the display synchronization accuracy between the display screens performing multi-screen display is no longer affected by the coordination delay of the software layer, thereby improving the display synchronization accuracy of multi-screen display, and enhancing the visual experience of users.

### Exemplary System

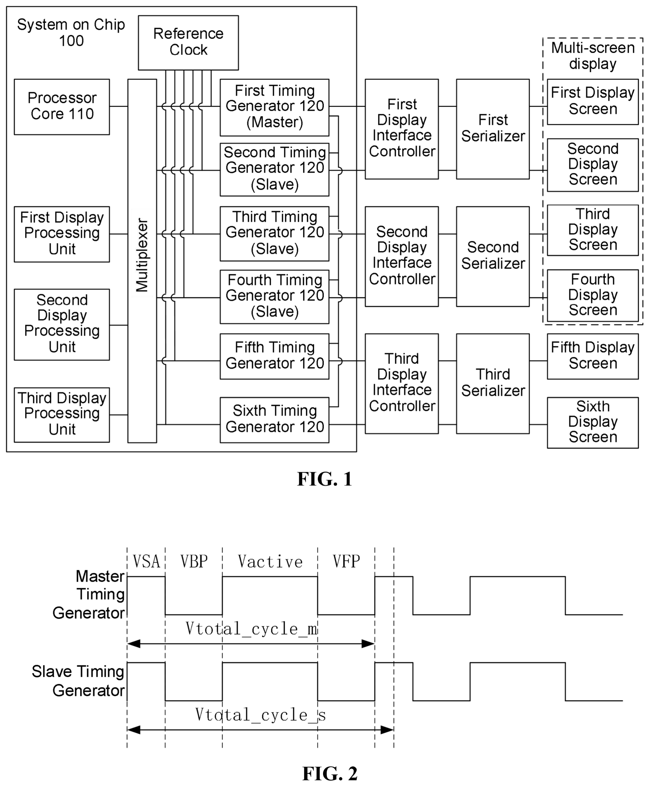

FIG. 1 is a structural schematic diagram of a system on chip supporting multi-screen display according to an exemplary embodiment of the present disclosure. As shown in FIG. 1, the system on chip 100 supporting multi-screen display includes: a processor core 110 and a timing generator 120. The processor core 110 is configured to perform a write operation on a synchronization control register of a timing generator 120 corresponding to a display screen performing multi-screen display, to enable a display synchronization function of the timing generator 120, and divide the timing generator 120 into a master timing generator and a slave timing generator. The master timing generator is configured to generate a first timing synchronization signal, transmit the first timing synchronization signal to a display screen corresponding to the master timing generator, and transmit a vertical synchronization signal of the first timing synchronization signal to the slave timing generator. And the slave timing generator is configured to generate a second timing synchronization signal in response to the vertical synchronization signal transmitted by the master timing generator, and transmit the second timing synchronization signal to a display screen corresponding to the slave timing generator.

Exemplarily, as shown in FIG. 1, the system on chip 100 includes a processor core 110, one or more Display Processing Units (DPU), a Multiplexer, a reference clock, and a plurality of Timing Generators (TMG) 120. The processor core 110 and the one or more display processing units are connected with the plurality of timing generators 120 through the multiplexer. The reference clock is connected with each timing generator 120 respectively. The plurality of timing generators 120 are connected with each other through a synchronization signal line or a bus. In the embodiment, one timing generator corresponds to one display screen. That is, one timing generator may be connected with one display screen through a display interface controller and a serializer. Different display screens may access the system on chip by adopting different display interface protocols. That is, different timing generators may be connected with their corresponding display screens through different display interface controllers and different serializers. For example, with reference to FIG. 1, the system on chip 100 includes a processor core 110, 3 display processing units (i.e., a first display processing unit, a second display processing unit and a third display processing unit), a multiplexer, a reference clock, and 6 timing generators 120 (i.e., a first timing generator, a second timing generator, a third timing generator, a fourth timing generator, a fifth timing generator and a sixth timing generator). The processor core 110, the first display processing unit, the second display processing unit and the third display processing unit are connected with the first timing generator to the sixth timing generator through the multiplexer. The reference clock is connected with the first timing generator to the sixth timing generator respectively. The first timing generator is connected with the first display screen through the first display interface controller and the first serializer, the second timing generator is connected with the second display screen through the first display interface controller and the first serializer, the third timing generator is connected with the third display screen through the second display interface controller and the second serializer, and so on.

When multiple display screens perform multi-screen display, the processor core 110 may be configured to perform a write operation on the synchronization control register (not shown in FIG. 1) of the timing generator 120 corresponding to the display screens performing multi-screen display to enable the display synchronization function of the timing generator 120 corresponding to the display screens performing multi-screen display, and divide the timing generator 120 corresponding to the display screens performing multi-screen display into a master timing generator and a slave timing generator. For example, with reference to FIG. 1, in a scenario where the first display screen to the fourth display screen perform multi-screen display, the processor core 110 may be configured to perform a write operation on the synchronization controllers of the first timing generator to the fourth timing generator corresponding to the first display screen to the fourth display screen respectively, enable the display synchronization function of the first timing generator to the fourth timing generator, set the first timing generator as the master timing generator, and set the second timing generator to the fourth timing generator as slave timing generators.

The display processing unit is configured to process the image data to be displayed, generate multiple paths of display data streams, and transmit the multiple paths of display data streams to the display screens performing multi-screen display through the multiplexer. One path of display data stream corresponds to one display screen, and correspondingly, one path of display data stream also corresponds to one timing generator. For example, with reference to FIG. 1, in a scenario where the first display screen to the fourth display screen perform multi-screen display, the first display processing unit is configured to process the image data to be displayed, and generate four paths of display data streams. The first path of display data stream corresponds to the first display screen and the first timing generator, the second path of display data stream corresponds to the second display screen and the second timing generator, the third path of display data stream corresponds to the third display screen and the third timing generator, and the fourth path of display data stream corresponds to the fourth display screen and the fourth timing generator.

In response to enabling the display synchronization function, the master timing generator may automatically generate a first timing synchronization signal based on the reference clock signal provided by the reference clock. The first timing synchronization signal may include a vertical synchronization signal (VSYNC), a horizontal synchronization signal (HSYNC) and a pixel clock signal (Pixel Clock). After generating the first timing synchronization signal, the master timing generator may transmit the first timing synchronization signal to the display screen corresponding to the master timing generator. Meanwhile, the master timing generator may further transmit the vertical synchronization signal of the first timing synchronization signal to the slave timing generator through the synchronization signal line or the bus. For example, with reference to FIG. 1, in a scenario where the first display screen to the fourth display screen perform multi-screen display, the first timing generator is a master timing generator, and the second timing generator to the fourth timing generator are slave timing generators. The first timing generator may generate a first timing synchronization signal based on the reference clock signal in response to enabling the display synchronization function. Then, the first timing generator may also transmit the first timing synchronization signal to the first display screen, and transmit the vertical synchronization signal of the first timing synchronization signal to the second timing generator, the third timing generator and the fourth timing generator through the synchronization signal line or the bus.

The slave timing generator cannot automatically generate the second timing synchronization signal, and needs to generate the second timing synchronization signal based on the reference clock signal provided by the reference clock with the vertical synchronization signal as the frame start reference signal of the image frame after receiving the vertical synchronization signal transmitted by the master timing generator. The second timing synchronization signal may also include a vertical synchronization signal (VSYNC), a horizontal synchronization signal (HSYNC) and a pixel clock signal (Pixel Clock). After generating the second timing synchronization signal, the slave timing generator may transmit the second timing synchronization signal to the display screen corresponding to the slave timing generator. For example, with reference to FIG. 1, in a scenario where the first display screen to the fourth display screen perform multi-screen display, the first timing generator is a master timing generator, and the second timing generator to the fourth timing generator are slave timing generators. After receiving the vertical synchronization signal transmitted by the first timing generator through the synchronization signal line or the bus, the second timing generator generates a second timing synchronization signal based on the reference clock signal provided by the reference clock with the vertical synchronization signal as the frame start reference signal of the image frame, and transmits the second timing synchronization signal to the second display screen. Meanwhile, after receiving the vertical synchronization signal transmitted by the first timing generator through the synchronization signal line or the bus, the third timing generator generates a second timing synchronization signal based on the reference clock signal provided by the reference clock with the vertical synchronization signal as the frame start reference signal of the image frame, and transmits the second timing synchronization signal to the third display screen. Meanwhile, after receiving the vertical synchronization signal transmitted by the first timing generator through the synchronization signal line or the bus, the fourth timing generator generates a second timing synchronization signal based on the reference clock signal provided by the reference clock with the vertical synchronization signal as the frame start reference signal of the image frame, and transmits the second timing synchronization signal to the fourth display screen.

After receiving the display data stream transmitted by the display processing unit and the timing synchronization signal transmitted by its corresponding timing generator, the display screen may display the image data based on the timing synchronization signal and the display data stream. For example, with reference to FIG. 1, in a scenario where the first display screen to the fourth display screen perform multi-screen display, the first timing generator is a master timing generator, and the second timing generator to the fourth timing generator are slave timing generators. After receiving the first path of display data stream transmitted by the display processing unit and the first timing synchronization signal transmitted by the first timing generator (master timing generator), the first display screen may display the image frame based on the first timing synchronization signal and the first path of display data stream. Similarly, after receiving the second path of display data stream transmitted by the display processing unit and the second timing synchronization signal transmitted by the second timing generator (slave timing generator), the second display screen may display the image frame based on the second timing synchronization signal and the second path of display data stream. After receiving the third path of display data stream transmitted by the display processing unit and the second timing synchronization signal transmitted by the third timing generator (slave timing generator), the third display screen may display the image frame based on the second timing synchronization signal and the third path of display data stream. After receiving the fourth path of display data stream transmitted by the display processing unit and the second timing synchronization signal transmitted by the fourth timing generator (slave timing generator), the fourth display screen may display the image frame based on the second timing synchronization signal and the fourth path of display data stream.

It should be noted that the display synchronization based on the vertical synchronization signal between the master timing generator and the slave timing generator is only supported, and not supported based on the horizontal synchronization signal. The reason is that the data formats of image data transmitted by different display interface protocols may be different, which will lead to different time for transmitting line data. When the frame rate is fixed, the number of vertical synchronization signals must be the same, while the number of horizontal synchronization signals may be different. Therefore, using the horizontal synchronization signal for display synchronization will lead to image tearing, while using the vertical synchronization signal for display synchronization will not lead to image tearing.

In the embodiment of the present disclosure, the master timing generator and the slave timing generator realize the synchronization of timing synchronization signals at the hardware layer across operating systems, so that the display synchronization accuracy between the display screens performing multi-screen display is no longer affected by the coordination delay of the software layer, thereby improving the display synchronization accuracy of multi-screen display, and enhancing the visual experience of users.

In some embodiments, the synchronization control flag bits in the synchronization control register of the timing generator 120 include one or more of a synchronization enable flag bit, a timing generator type flag bit, a master timing generator flag bit, a synchronization state switching flag bit, a synchronization alignment flag bit, a synchronization loss flag bit, and a synchronization delay flag bit.

Exemplarily, the processor core 110 may control the display synchronization function of the timing generator 120 by performing a write operation on the synchronization control flag bit in the synchronization control register of the timing generator 120. Similarly, the timing generator 120 may perform the corresponding display synchronization function by performing a read operation on the synchronization control flag bit in the synchronization control register. To realize the control of one or more display synchronization functions, the synchronization control register of the timing generator 120 may usually include one or more of the following control flag bits. (1) Synchronization Enable Flag Bit (SYNC_EN). When the synchronization enable flag bit = 1, it means that the display synchronization function of the timing generator 120 is turned on; when the synchronization enable flag bit = 0, it means that the display synchronization function of the timing generator 120 is turned off. (2)Timing Generator Type Flag Bit (TYPE). When the timing generator type flag bit = 1, it means that the timing generator 120 is a master timing generator; when the timing generator type flag bit = 0, it means that the timing generator 120 is a slave timing generator. (3)Master Timing Generator Flag Bit (MASTER_ID). The master timing generator flag bit = the timing generator identifier of the master timing generator, and the slave timing generator will generate the second timing synchronization signal with the vertical synchronization signal as the start reference signal only after receiving the vertical synchronization signal transmitted by the master timing generator corresponding to the timing generator identifier. (4)Synchronization State Switching Flag Bit (FORCE_OUT_SYNC). When the synchronization state switching flag bit = 0, it means that the slave timing generator waits for the vertical synchronization signal transmitted by the master timing generator, to generate the second timing synchronization signal with the vertical synchronization signal as the start reference signal; when the synchronization state switching flag bit = 1, it means that the slave timing generator does not wait for the vertical synchronization signal transmitted by the master timing generator, and automatically generates the second timing synchronization signal. (5)Synchronization Alignment Flag Bit (WAIT_NEXT_VSYNC). When the synchronization alignment flag bit = 1, it means that after the slave timing generator restores the display synchronization with the master timing generator, the slave timing generator performs display synchronization with the master timing generator in the next image frame. (6)Synchronization Loss Flag Bit (BLACK_FRAME_ON_SYNC_LOSS). When the synchronization loss flag bit = 1, it means that when the display synchronization between the slave timing generator and the master timing generator is lost, the slave timing generator generates a timing synchronization signal for displaying a black frame. (7) Synchronization Delay Flag Bit (VSYNC_DELAY_LINES). The synchronization delay flag bit = the number of synchronization delay lines, which means that after receiving the vertical synchronization signal transmitted by the master timing generator, the slave timing generator generates the second timing synchronization signal after delaying the number of synchronization delay lines of horizontal synchronization signals.

In the embodiment of the present disclosure, the synchronization control flag bits in the synchronization control register of the timing generator 120 include one or more of a synchronization enable flag bit, a timing generator type flag bit, a master timing generator flag bit, a synchronization state switching flag bit, a synchronization alignment flag bit, a synchronization loss flag bit, and a synchronization delay flag bit. As such, by setting a variety of synchronization control flag bits in the synchronization control register, the control of one or more display synchronization functions of the timing generator may be realized.

In some embodiments, as shown in FIG. 1, the processor core 110 is configured to perform a set operation on a synchronization enable flag bit in a first synchronization control register corresponding to a first timing generator among the timing generators 120, to enable a display synchronization function of the first timing generator, and perform a set operation on the timing generator type flag bit in the first synchronization control register, to set the first timing generator as the master timing generator. The processor core 110 is further configured to perform a set operation on a synchronization enable flag bit in a second synchronization control register corresponding to a second timing generator among the timing generators 120, to enable a display synchronization function of the second timing generator, and perform a set operation on a timing generator type flag bit in the second synchronization control register, to set the second timing generator as the slave timing generator.

Exemplarily, when multiple display screens perform multi-screen display, for the master timing generator, the processor core 110 may be configured to perform a set operation on the synchronization enable flag bit in the first synchronization control register corresponding to the first timing generator (i.e., the master timing generator) among the timing generators 120, to set the synchronization enable flag bit to 1 to enable the display synchronization function of the first timing generator. Meanwhile, the processor core 110 may further be configured to perform a set operation on the timing generator type flag bit in the first synchronization control register corresponding to the first timing generator (i.e., the master timing generator), to set the timing generator type flag bit to 1, so as to set the first timing generator as the master timing generator. For the slave timing generator, the processor core 110 may be configured to perform a set operation on the synchronization enable flag bit in the second synchronization control register corresponding to the second timing generator (i.e., the slave timing generator) among the timing generators 120, to set the synchronization enable flag bit to 1 so as to enable the display synchronization function of the second timing generator. Meanwhile, the processor core 110 may further be configured to perform a set operation on the timing generator type flag bit in the second synchronization control register corresponding to the second timing generator (i.e., the slave timing generator), to set the timing generator type flag bit to 0 so as to set the second timing generator as the slave timing generator. Subsequently, the first timing generator (i.e., the master timing generator) may automatically generate a first timing synchronization signal based on the reference clock signal provided by the reference clock in response to enabling the display synchronization function, and transmit the vertical synchronization signal of the first timing synchronization signal to the second timing generator (i.e., the slave timing generator) through the synchronization signal line or the bus. After receiving the vertical synchronization signal transmitted by the first timing generator, the second timing generator generates a second timing synchronization signal based on the reference clock signal provided by the reference clock with the vertical synchronization signal as the frame start reference signal of the image frame.

In the embodiment of the present disclosure, the processor core 110 is configured to perform a set operation on the synchronization enable flag bits in the synchronization control registers corresponding to the first timing generator and the second timing generator respectively, enables the display synchronization function of the first timing generator and the second timing generator, and performs a set operation on the timing generator type flag bits in the synchronization control registers to set the first timing generator as a master timing generator and the second timing generator as a slave timing generator. As such, subsequently, the master timing generator and the slave timing generator realize the synchronization of timing synchronization signals at the hardware layer across operating systems, so that the display synchronization accuracy between the display screens performing multi-screen display is no longer affected by the coordination delay of the software layer, thereby improving the display synchronization accuracy of multi-screen display, and enhancing the visual experience of users.

In some embodiments, as shown in FIG. 1, the processor core 110 is configured to set a parameter value of a master timing generator flag bit in the second synchronization control register corresponding to the second timing generator to a timing generator identifier corresponding to the first timing generator. The second timing generator is configured to generate a second timing synchronization signal in response to the vertical synchronization signal transmitted by the first timing generator, and transmit the second timing synchronization signal to a display screen corresponding to the second timing generator.

Exemplarily, when multiple groups of displays perform multi-screen display simultaneously, there will be multiple master timing generators in the system on chip 100 at the same time, and different master timing generators correspond to different slave timing generators. For example, with reference to FIG. 1, in a scenario where the first display screen to the fourth display screen perform multi-screen display, the first timing generator is a master timing generator, and the second timing generator to the fourth timing generator are slave timing generators corresponding to the first timing generator. In a scenario where the fifth display screen and the sixth display screen perform multi-screen display, the fifth timing generator is a master timing generator, and the sixth timing generator is a slave timing generator corresponding to the fifth timing generator. Since all timing generators 120 are connected through a synchronization signal line or a bus, the slave timing generator will inevitably receive the vertical synchronization signals transmitted by multiple master timing generators. At this time, if the slave timing generator cannot distinguish whether the received vertical synchronization signal comes from its corresponding master timing generator, it will lead to a display synchronization error. Based on this, the processor core 110 may be configured to set the parameter value of the master timing generator flag bit in the second synchronization control register corresponding to the second timing generator (i.e., the slave timing generator) to the timing generator identifier corresponding to the first timing generator (i.e., the master timing generator). For example, with reference to FIG. 1, in a scenario where the first display screen to the fourth display screen perform multi-screen display, the first timing generator is a master timing generator, and the second timing generator to the fourth timing generator are slave timing generators. The processor core 110 may be configured to set the parameter values of the master timing generator flag bits in the synchronization control registers corresponding to the second timing generator to the fourth timing generator to the timing generator identifier corresponding to the first timing generator. Subsequently, the first timing generator (i.e., the master timing generator) transmits the vertical synchronization signal of the first timing synchronization signal to the second timing generator (i.e., the slave timing generator) through the synchronization signal line or the bus. The vertical synchronization signal may also carry the timing generator identifier of the first timing generator. After only receiving the vertical synchronization signal transmitted by the first timing generator, the second timing generator generates a second timing synchronization signal based on the reference clock signal provided by the reference clock with the vertical synchronization signal as the frame start reference signal of the image frame. That is, after receiving the vertical synchronization signal transmitted by other master timing generators, the second timing generator will ignore the vertical synchronization signal.

In the embodiment of the present disclosure, the processor core 110 is configured to set a parameter value of a master timing generator flag bit in the second synchronization control register corresponding to the second timing generator to a timing generator identifier corresponding to the first timing generator. The second timing generator is configured to generate a second timing synchronization signal only in response to the vertical synchronization signal transmitted by the first timing generator, and transmit the second timing synchronization signal to a display screen corresponding to the second timing generator. As such, when multiple groups of displays perform multi-screen display simultaneously, it will be avoided that the slave timing generator cannot distinguish whether the received vertical synchronization signal comes from its corresponding master timing generator, which will lead to a display synchronization error.

In some embodiments, the processor core 110 is further configured to set a parameter value of a synchronization delay flag bit in the synchronization control register corresponding to the slave timing generator to a number of synchronization delay lines. The slave timing generator is configured to generate the second timing synchronization signal after delaying the number of synchronization delay lines of horizontal synchronization signals in response to the vertical synchronization signal transmitted by the master timing generator, and transmit the second timing synchronization signal to a display screen corresponding to the slave timing generator.

Exemplarily, in order to avoid high instantaneous power consumption caused by the display screens corresponding to all slave timing generators refreshing the image frames simultaneously, the processor core 110 may be configured to set a parameter value of a synchronization delay flag bit in the synchronization control register corresponding to the slave timing generator to a number of synchronization delay lines. The number of synchronization delay lines corresponding to different slave timing generators may be the same or different, which is not limited in the embodiment of the present disclosure. Further, when the number of synchronization delay lines is a positive number, it means backward delay, and when the number of synchronization delay lines is a negative number, it means forward delay (also referred to as advance). For example, with reference to FIG. 1, in a scenario where the first display screen to the fourth display screen perform multi-screen display, the first timing generator is a master timing generator, and the second timing generator to the fourth timing generator are slave timing generators corresponding to the first timing generator. The number of synchronization delay lines corresponding to the second timing generator to the fourth timing generator may all be 1. Of course, the number of synchronization delay lines corresponding to the second timing generator may be 1, the number of synchronization delay lines corresponding to the third timing generator may be 2, and the number of synchronization delay lines corresponding to the fourth timing generator may be 3. Subsequently, after receiving the vertical synchronization signal transmitted by the first timing generator, the second timing generator generates a second timing synchronization signal based on the reference clock signal provided by the reference clock after delaying the number of synchronization delay lines of horizontal synchronization signals with the vertical synchronization signal as the frame start reference signal of the image frame. As shown in FIG. 2, the pixel clock cycle corresponding to the first timing synchronization signal generated by the master timing generator Vtotal_cycle_m=Vtotal×Htotal. Vtotal represents the pixel clock cycle corresponding to the first timing synchronization signal in the vertical direction, and Htotal represents the pixel clock cycle corresponding to the first timing synchronization signal in the horizontal direction. Vtotal=VSA+VBP+Vactive+VFP, Htotal=HSA+HBP+Hactive+HFP. VSA (Vertical Sync Asynchronous) represents the front shoulder of the vertical synchronization signal, which refers to the time before the vertical synchronization signal, during which the position of the image is usually adjusted or the screen is refreshed to ensure that the image may be displayed correctly; VBP (Vertical Back Porch) represents the back porch of the vertical synchronization signal, which refers to a period of time after the vertical synchronization signal, during which the position of the image is adjusted or the screen is refreshed to ensure that the image remains stable during the display process; VFP (Vertical Front Porch ) represents the front porch of the vertical synchronization signal, which refers to a period of time before the vertical synchronization signal, during which the position of the image is also adjusted or the screen is also refreshed, similar to VSA but located before the vertical synchronization signal; Vactive represents vertical active pixels. In a video signal, Vactive refers to the vertical resolution, that is, the number of pixels of the display screen or image in the vertical direction, which is a key parameter to determine how much vertical information the display device may present. The display screen displays the actual video signal during the Active time. VSA, VBP and VFP together form a vertical blanking part of the video signal. The functions of has (Horizontal Sync Asynchronous), HBP (Horizontal Back Porch), HFP (Horizontal Front Porch) and Hactive are respectively similar to those of VSA, VBP, VFP and Vactive, which will not be repeated here. The pixel clock cycle corresponding to the second timing synchronization signal generated by the slave timing generator Vtotal_cycle_s=Vtotal_cycle_m±N. N is the frame period offset of the slave timing generator relative to the master timing generator in units of pixel clock cycles (i.e., the number of synchronization delay lines), which is used to realize frame-level delay or advance.

For example, in a scenario where the display screen is 4k60fps, under the ideal condition of Video Electronics Standards Association (VESA) timing, the parameters are respectively: resolution=3840x2160, frame rate=60fps, pixel clock=594M, VSA=8 lines, VBP=36 lines, VFP=4 lines, Vactive=2160 lines, and Htotal=4400 pixels/line. The pixel clock cycle corresponding to the first timing synchronization signal of the master timing generator Vtotal_cycle_m=(2160+8+36+4)×4400=9715200 pixel clocks. Assuming that the number of synchronization delay lines of the slave timing generator relative to the master timing generator is 1 line, the pixel clock cycle corresponding to the second timing synchronization signal of the slave timing generator Vtotal_cycle_s=Vtotal_cycle_m+N=9715200+4400=9719600 pixel clocks. Further, from frame period time=number of frame pixel cycles/clock frequency, the frame period time of the master timing generator T_frame_master=9715200/594MHz≈16.35 ms. The frame period time of the slave timing generator T_frame_slave=9719600/594MHz≈16.36 ms. Therefore, the frame period time of the slave timing generator lags behind that of the master timing generator by about 0.01 ms.

In the embodiment of the present disclosure, the processor core 110 is configured to set a parameter value of a synchronization delay flag bit in the synchronization control register corresponding to the slave timing generator to a number of synchronization delay lines. Then, the slave timing generator generates the second timing synchronization signal after delaying the number of synchronization delay lines of horizontal synchronization signals in response to the vertical synchronization signal transmitted by the master timing generator. As such, the processor core 110 may realize the controllable frame delay synchronization of the slave timing generator relative to the master timing generator, thereby avoiding high instantaneous power consumption caused by the display screens corresponding to all slave timing generators refreshing the image frames simultaneously.

In some embodiments, the processor core 110 is further configured to perform a set operation on a synchronization state switching flag bit in the synchronization control register corresponding to the slave timing generator, to stop a display synchronization between the slave timing generator and the master timing generator. The slave timing generator is configured to generate a third timing synchronization signal, and transmit the third timing synchronization signal to the display screen corresponding to the slave timing generator.

Exemplarily, when a certain display screen among the display screens performing multi-screen display needs to temporarily exit the multi-screen display, the corresponding slave timing generator also needs to temporarily exit the display synchronization with the master timing generator. Based on this, the processor core 110 may be configured to perform a set operation on the synchronization state switching flag bit in the synchronization control register of the slave timing generator corresponding to the display screen to set the synchronization state switching flag bit to 1, so as to stop the display synchronization between the slave timing generator and the master timing generator. At this time, the slave timing generator no longer waits for the vertical synchronization signal transmitted by the master timing generator, but automatically generates a third timing synchronization signal, and transmits the third timing synchronization signal to the display screen corresponding to the slave timing generator.

In the embodiment of the present disclosure, when a certain display screen among the display screens performing multi-screen display needs to temporarily exit the multi-screen display, the processor core 110 may be configured to perform a set operation on the synchronization state switching flag bit in the synchronization control register of the slave timing generator corresponding to the display screen, thereby temporarily stopping the display synchronization between the slave timing generator and the master timing generator.

In some embodiments, the processor core 110 is further configured to perform a set operation on the synchronization state switching flag bit in the synchronization control register corresponding to the slave timing generator to restore the display synchronization between the slave timing generator and the master timing generator, perform a set operation on the synchronization alignment flag bit in the synchronization control register to enable the slave timing generator to perform display synchronization alignment with the master timing generator in a next image frame, and perform a set operation on the synchronization loss flag bit in the synchronization control register to enable the slave timing generator to output a black frame when the display synchronization with the master timing generator is lost. The slave timing generator is configured to generate a fourth timing synchronization signal in response to a loss of display synchronization with the master timing generator, and transmit the fourth timing synchronization signal to a display screen corresponding to the slave timing generator. The fourth timing synchronization signal is used to instruct the second display screen to display a black frame. The slave timing generator is further configured to generate a second timing synchronization signal in response to the vertical synchronization signal transmitted by the master timing generator in a next image frame, and transmit the second timing synchronization signal to a display screen corresponding to the slave timing generator.

Exemplarily, when a certain display screen among the display screens performing multi-screen display temporarily exits the multi-screen display and then resumes the multi-screen display with other display screens, the corresponding slave timing generator also needs to resume the display synchronization with the master timing generator. Based on this, the processor core 110 may be configured to perform a set operation on the synchronization state switching flag bit in the synchronization control register of the slave timing generator corresponding to the display screen to set the synchronization state switching flag bit to 0, so as to restore the display synchronization between the slave timing generator and the master timing generator. Meanwhile, the processor core 110 may be configured to perform a set operation on the synchronization alignment flag bit in the synchronization control register of the slave timing generator corresponding to the display screen to set the synchronization alignment flag bit to 1, so that after the slave timing generator resumes the display synchronization with the master timing generator, the slave timing generator performs display synchronization with the master timing generator in the next image frame. At this time, the slave timing generator waits for the vertical synchronization signal transmitted by the master timing generator in the next image frame, and in response to the vertical synchronization signal transmitted by the master timing generator in the next image frame, generates a second timing synchronization signal based on the reference clock signal provided by the reference clock with the vertical synchronization signal as the frame start reference signal of the image frame, and transmits the second timing synchronization signal to the display screen corresponding to the slave timing generator. As such, the display screen resumes the multi-screen display with other display screens.

Further, in the case that the display synchronization between the slave timing generator and the master timing generator is lost, if the display screen corresponding to the slave timing generator still displays the image frame, it will lead to the image frame split between the display screen and other display screens, thereby reducing the user's visual experience. To avoid the above adverse situation, the processor core 110 may further be configured to perform a set operation on the synchronization loss flag bit in the synchronization control register of the slave timing generator corresponding to the display screen to set the synchronization loss flag bit to 1, so that when the display synchronization between the slave timing generator and the master timing generator is lost, the slave timing generator generates a timing synchronization signal for displaying a black frame. At this time, the slave timing generator is configured to generate a fourth timing synchronization signal in response to a loss of display synchronization with the master timing generator and transmit the fourth timing synchronization signal to a display screen corresponding to the slave timing generator. The fourth timing synchronization signal is used to instruct the second display screen to display a black frame. Compared with the second timing synchronization signal and the third timing synchronization signal, the Vactive and Hactive of the fourth timing synchronization signal are both 0, and Vactive and Hactive being 0 means that no pixels are allocated in the timing synchronization signal for displaying a valid image frame. Subsequently, after receiving the fourth timing synchronization signal, the display screen corresponding to the slave timing generator may display a black frame based on the fourth timing synchronization signal.

In the embodiment of the present disclosure, after restoring the display synchronization between the slave timing generator and the master timing generator, the processor core 110 is configured to perform a set operation on the synchronization alignment flag bit in the synchronization control register corresponding to the slave timing generator to enable the slave timing generator to perform display synchronization alignment with the master timing generator in a next image frame, and perform a set operation on the synchronization loss flag bit in the synchronization control register to enable the slave timing generator to output a black frame when the display synchronization with the master timing generator is lost. As such, the slave timing generator generates a fourth timing synchronization signal in response to a loss of display synchronization with the master timing generator, and transmits the fourth timing synchronization signal to the display screen corresponding to the slave timing generator, so that the display screen displays a black frame. Meanwhile, the slave timing generator generates a second timing synchronization signal in response to the vertical synchronization signal transmitted by the master timing generator in the next image frame, and transmits the second timing synchronization signal to the display screen corresponding to the slave timing generator, so that the display screen restores the display synchronization with other display screens. As such, it is possible to avoid the situation that the display screen corresponding to the slave timing generator still displays the image frame when the display synchronization between the slave timing generator and the master timing generator is lost, which leads to the image frame split between the display screen and other display screens performing multi-screen display and reduces the user's visual experience.

### Exemplary Method

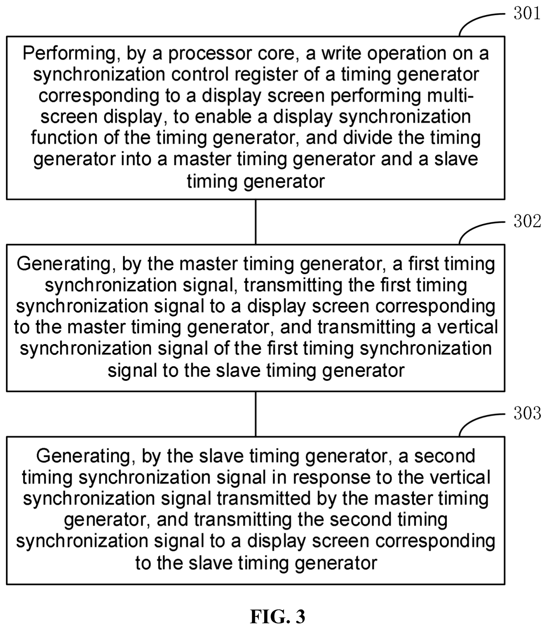

FIG. 3 is a flow schematic diagram of a synchronization method for multi-screen display based on a system on chip according to an exemplary embodiment of the present disclosure. As shown in FIG. 3, the synchronization method for multi-screen display based on a system on chip may include the following steps:

Step 301, Performing, by a processor core, a write operation on a synchronization control register of a timing generator corresponding to a display screen performing multi-screen display, to enable a display synchronization function of the timing generator, and divide the timing generator into a master timing generator and a slave timing generator.

Step 302, Generating, by the master timing generator, a first timing synchronization signal, transmitting the first timing synchronization signal to a display screen corresponding to the master timing generator, and transmitting a vertical synchronization signal of the first timing synchronization signal to the slave timing generator.

Step 303, Generating, by the slave timing generator, a second timing synchronization signal in response to the vertical synchronization signal transmitted by the master timing generator, and transmitting the second timing synchronization signal to a display screen corresponding to the slave timing generator.

In some embodiments, synchronization control flag bits in the synchronization control register include one or more of a synchronization enable flag bit, a timing generator type flag bit, a master timing generator flag bit, a synchronization state switching flag bit, a synchronization alignment flag bit, a synchronization loss flag bit, and a synchronization delay flag bit.

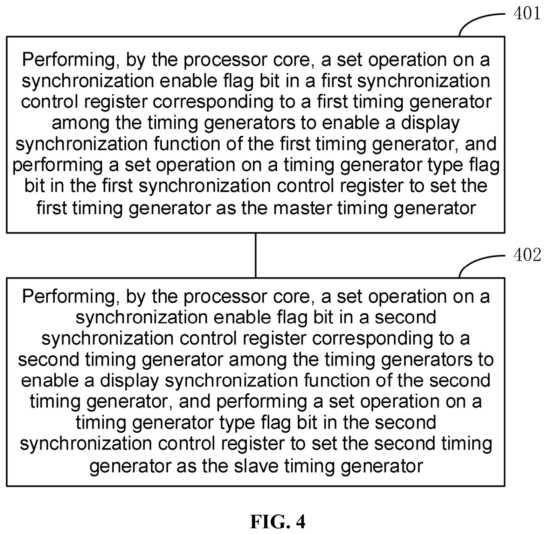

In an embodiment, as shown in FIG. 4, on the basis of the embodiment shown in FIG. 3, step 302 may include the following steps:

Step 401, Performing, by the processor core, a set operation on a synchronization enable flag bit in a first synchronization control register corresponding to a first timing generator among the timing generators to enable a display synchronization function of the first timing generator, and performing a set operation on a timing generator type flag bit in the first synchronization control register to set the first timing generator as the master timing generator.

Step 402, Performing, by the processor core, a set operation on a synchronization enable flag bit in a second synchronization control register corresponding to a second timing generator among the timing generators to enable a display synchronization function of the second timing generator, and performing a set operation on a timing generator type flag bit in the second synchronization control register to set the second timing generator as the slave timing generator.

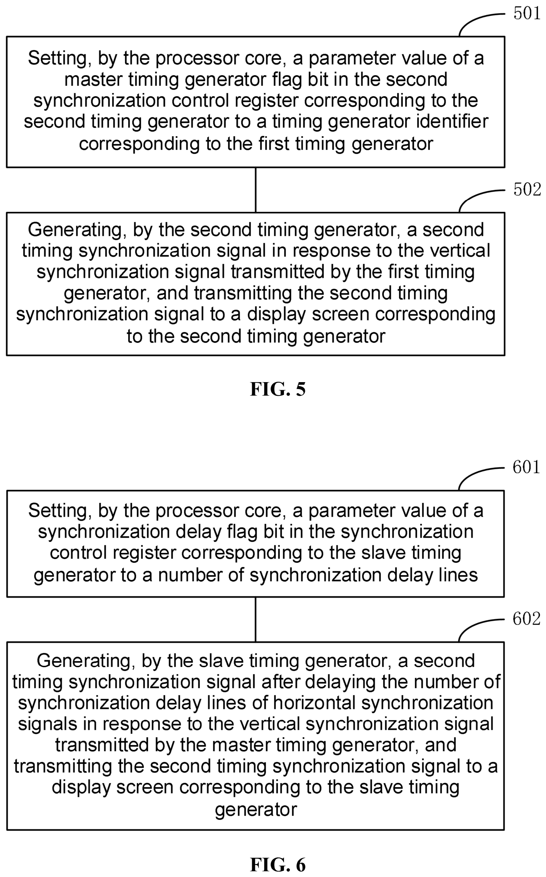

In an embodiment, as shown in FIG. 5, on the basis of the embodiment shown in FIG. 3, step 303 may include the following steps:

Step 501, Setting, by the processor core, a parameter value of a master timing generator flag bit in the second synchronization control register corresponding to the second timing generator to a timing generator identifier corresponding to the first timing generator.

Step 502, Generating, by the second timing generator, a second timing synchronization signal in response to the vertical synchronization signal transmitted by the first timing generator, and transmitting the second timing synchronization signal to a display screen corresponding to the second timing generator.

In an embodiment, as shown in FIG. 6, on the basis of the embodiment shown in FIG. 3, step 303 may include the following steps:
Step 601, Setting, by the processor core, a parameter value of a synchronization delay flag bit in the synchronization control register corresponding to the slave timing generator to a number of synchronization delay lines.

Step 602, Generating, by the slave timing generator, a second timing synchronization signal after delaying the number of synchronization delay lines of horizontal synchronization signals in response to the vertical synchronization signal transmitted by the master timing generator, and transmitting the second timing synchronization signal to a display screen corresponding to the slave timing generator.

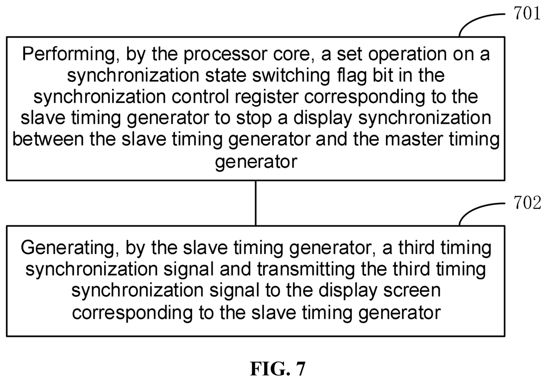

In an embodiment, as shown in FIG. 7, on the basis of the embodiment shown in FIG. 3, the synchronization method for multi-screen display based on a system on chip may further include the following steps:

Step 701, Performing, by the processor core, a set operation on a synchronization state switching flag bit in the synchronization control register corresponding to the slave timing generator to stop a display synchronization between the slave timing generator and the master timing generator.

Step 702, Generating, by the slave timing generator, a third timing synchronization signal and transmitting the third timing synchronization signal to the display screen corresponding to the slave timing generator.

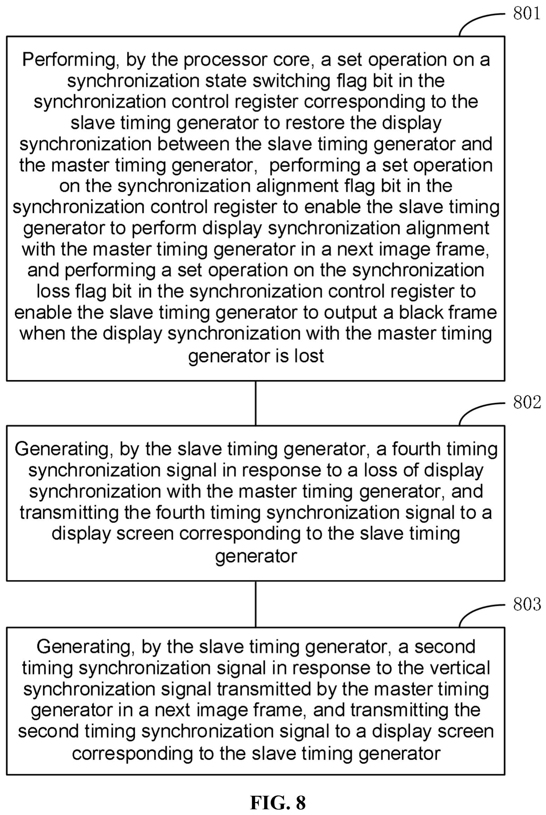

In an embodiment, as shown in FIG. 8, on the basis of the embodiment shown in FIG. 3, the synchronization method for multi-screen display based on a system on chip may further include the following steps:
Step 801, Performing, by the processor core, a set operation on a synchronization state switching flag bit in the synchronization control register corresponding to the slave timing generator to restore the display synchronization between the slave timing generator and the master timing generator, performing a set operation on the synchronization alignment flag bit in the synchronization control register to enable the slave timing generator to perform display synchronization alignment with the master timing generator in a next image frame, and performing a set operation on the synchronization loss flag bit in the synchronization control register to enable the slave timing generator to output a black frame when the display synchronization with the master timing generator is lost.

Step 802, Generating, by the slave timing generator, a fourth timing synchronization signal in response to a loss of display synchronization with the master timing generator, and transmitting the fourth timing synchronization signal to a display screen corresponding to the slave timing generator. The fourth timing synchronization signal is used to instruct the second display screen to display a black frame.

Step 803, Generating, by the slave timing generator, a second timing synchronization signal in response to the vertical synchronization signal transmitted by the master timing generator in a next image frame, and transmitting the second timing synchronization signal to a display screen corresponding to the slave timing generator.

For the synchronization method for multi-screen display based on a system on chip in the above embodiments, the specific manner of performing operations in each step and the corresponding beneficial effects have been described in detail in the corresponding embodiments of the system on chip supporting multi-screen display above, and reference may be made to the corresponding operation manners and beneficial technical effects in the above exemplary system part, which will not be repeated here.

### Exemplary Device

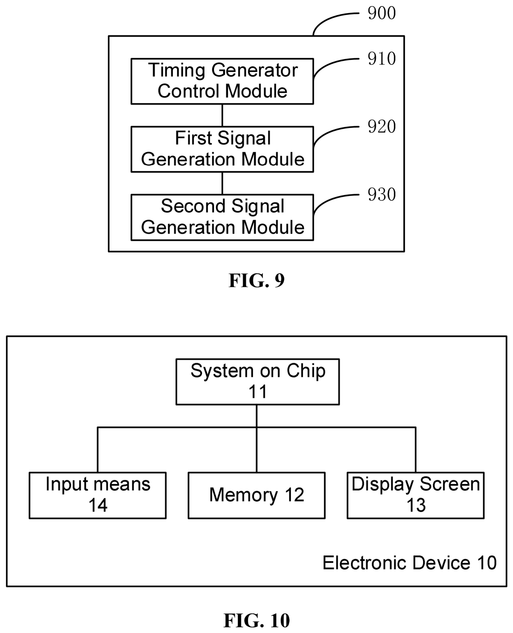

FIG. 9 is a structural schematic diagram of a multi-screen display synchronization device based on a system on chip according to an exemplary embodiment of the present disclosure. As shown in FIG. 9, the multi-screen display synchronization device 900 based on a system on chip includes a timing generator control module 910, a first signal generation module 920 and a second signal generation module 930.

The timing generator control module 910 is configured to perform, by a processor core, a write operation on a synchronization control register of a timing generator corresponding to a display screen performing multi-screen display, to enable a display synchronization function of the timing generator, and divide the timing generator into a master timing generator and a slave timing generator;
a first signal generation module 920 configured to generate, by the master timing generator, a first timing synchronization signal, transmit the first timing synchronization signal to a display screen corresponding to the master timing generator, and transmit a vertical synchronization signal of the first timing synchronization signal to the slave timing generator; and
A second signal generation module 930 configured to generate, by the slave timing generator, a second timing synchronization signal in response to the vertical synchronization signal transmitted by the master timing generator, and transmit the second timing synchronization signal to a display screen corresponding to the slave timing generator.

In some embodiments, synchronization control flag bits in the synchronization control register include one or more of a synchronization enable flag bit, a timing generator type flag bit, a master timing generator flag bit, a synchronization state switching flag bit, a synchronization alignment flag bit, a synchronization loss flag bit, and a synchronization delay flag bit.

In some embodiments, the timing generator control module 910 is specifically configured to perform, by the processor core, a set operation on a synchronization enable flag bit in a first synchronization control register corresponding to a first timing generator among the timing generators to enable a display synchronization function of the first timing generator, and perform a set operation on the timing generator type flag bit in the first synchronization control register to set the first timing generator as the master timing generator; and
The timing generator control module 910 is specifically configured to perform, by the processor core, a set operation on a synchronization enable flag bit in a second synchronization control register corresponding to a second timing generator among the timing generators to enable a display synchronization function of the second timing generator, and perform a set operation on a timing generator type flag bit in the second synchronization control register to set the second timing generator as the slave timing generator.

In some embodiments, the timing generator control module 910 is specifically configured to set, by the processor core, a parameter value of a master timing generator flag bit in the second synchronization control register corresponding to the second timing generator to a timing generator identifier corresponding to the first timing generator;
a second signal generation module 930 is specifically configured to generate, by the slave timing generator, a second timing synchronization signal in response to the vertical synchronization signal transmitted by the first timing generator, and transmit the second timing synchronization signal to a display screen corresponding to the second timing generator.

In some embodiments, the timing generator control module 910 is specifically configured to set, by the processor core, a parameter value of a synchronization delay flag bit in the synchronization control register corresponding to the slave timing generator to a number of synchronization delay lines;
The second signal generation module 930 is specifically configured to generate, by the slave timing generator, a second timing synchronization signal after delaying the number of synchronization delay lines of horizontal synchronization signals in response to the vertical synchronization signal transmitted by the master timing generator, and transmit the second timing synchronization signal to a display screen corresponding to the slave timing generator.

In some embodiments, the timing generator control module 910 is specifically configured to perform, by the processor core, a set operation on a synchronization state switching flag bit in the synchronization control register corresponding to the slave timing generator, to stop a display synchronization between the slave timing generator and the master timing generator;
the second signal generation module 930 is specifically configured to generate, by the slave timing generator, a third timing synchronization signal, and transmit the third timing synchronization signal to the display screen corresponding to the slave timing generator.

In some embodiments, the timing generator control module 910 is specifically configured to perform, by the processor core, a set operation on the synchronization state switching flag bit in the synchronization control register corresponding to the slave timing generator, to restore the display synchronization between the slave timing generator and the master timing generator, perform a set operation on the synchronization alignment flag bit in the synchronization control register to enable the slave timing generator to perform display synchronization alignment with the master timing generator in a next image frame, and perform a set operation on the synchronization loss flag bit in the synchronization control register to enable the slave timing generator to output a black frame when the display synchronization with the master timing generator is lost;
the second signal generation module 930 is specifically configured to generate, by the slave timing generator, a fourth timing synchronization signal in response to a loss of display synchronization with the master timing generator, and transmit the fourth timing synchronization signal to a display screen corresponding to the slave timing generator; where the fourth timing synchronization signal is used to instruct the second display screen to display a black frame; and
a second signal generation module 930 specifically configured to generate, by the slave timing generator, a second timing synchronization signal in response to the vertical synchronization signal transmitted by the master timing generator in a next image frame, and transmit the second timing synchronization signal to a display screen corresponding to the slave timing generator.

The beneficial technical effects corresponding to the exemplary embodiments of the device may be referred to the corresponding beneficial technical effects of the above exemplary method part, which will not be repeated here.

### Exemplary Electronic Device

FIG. 10 is a structure diagram of an electronic device including a system on chip 11, a memory 12 and a display screen 13 according to an embodiment of the present disclosure.

The display screen 13 is configured to perform multi-screen display based on a first timing synchronization signal output by a master timing generator and a second timing synchronization signal output by a slave timing generator in the system on chip 11.

The system on chip 11 may correspond to the system on chip supporting multi-screen display in the embodiment shown in FIG. 1. The memory 12 may be various forms of computer readable storage media, such as volatile memory and/or non-volatile memory. The volatile memory may include, for example, Random Access Memory (RAM) and/or cache memory, etc. The non-volatile memory may include, for example, Read-Only Memory (ROM), a hard disk, a flash memory, etc.

In one example, the electronic device 10 may further include: an input means 14, and these components are interconnected through a bus system and/or other forms of connection mechanisms (not shown).

The input means 14 may also include, for example, a keyboard, a mouse, and the like.

Of course, for simplicity, only some of the components in the electronic device 10 related to the present disclosure are shown in FIG. 10, and components such as a bus, an input/output interface, etc. are omitted. In addition, according to specific application conditions, the electronic device 10 may also include any other appropriate components.

The electronic device described in the embodiment of the present disclosure may be an intelligent terminal, a vehicle-mounted terminal, an intelligent driving domain controller, a central computing platform, etc.

### Exemplary Computer Program Product and Computer Readable Storage Medium

In the embodiments of the present disclosure, in addition to the above methods and devices, there may be also provided a computer program product including computer program instructions, which when executed by a processor, cause the processor to perform the steps in the synchronization method for multi-screen display based on a system on chip according to various embodiments of the present disclosure described in the above "Exemplary Method" section.

The computer program product may be written with program codes for performing the operations of the embodiments of the present disclosure in any combination of one or more programming languages, including object-oriented programming languages such as Java, C++, etc., as well as conventional procedural programming languages such as the "C" language or similar programming languages. The program codes may be executed entirely on the user's computing device, partly on the user's device, as a stand-alone software package, partly on the user's computing device and partly on a remote computing device, or entirely on the remote computing device or server.

Furthermore, in the embodiments of the present disclosure, there may be also provided a computer readable storage medium having computer program instructions stored thereon, which when executed by a processor, cause the processor to perform the steps in the synchronization method for multi-screen display based on a system on chip according to various embodiments of the present disclosure described in the above "Exemplary Method" section.

The computer readable storage medium may adopt any combination of one or more readable media. The readable medium may be a readable signal medium or a readable storage medium. The readable storage medium includes, for example, but is not limited to, an electrical, magnetic, optical, electromagnetic, infrared, or semiconductor system, apparatus or device, or any combination of the above. More specific examples (non-exhaustive list) of the readable storage medium include: an electrical connection with one or more wires, a portable disk, a hard disk, a Random Access Memory (RAM), a Read-Only Memory (ROM), an Erasable Programmable Read-Only Memory (EPROM or flash memory), an optical fiber, a portable Compact Disc Read-Only Memory (CD-ROM), an optical storage device, a magnetic storage device, or any suitable combination of the above.

The basic principles of the present disclosure have been described above in conjunction with specific embodiments. However, the advantages, benefits, effects, etc. mentioned in the present disclosure are merely examples and not limitations, and cannot be considered as essential for each embodiment of the present disclosure. In addition, the specific details disclosed above are only for exemplary purposes and facilitating understanding, rather than limitations. The above details do not limit the present disclosure to be implemented by using the above specific details.

A person skilled in the art may make various changes and modifications to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

## Claims

1. A system on chip supporting multi-screen display, **characterized by** comprising:
a processor core configured to perform a write operation on a synchronization control register of a timing generator corresponding to a display screen performing multi-screen display, to enable a display synchronization function of the timing generator, and divide the timing generator into a master timing generator or a slave timing generator; wherein
the master timing generator is configured to generate a first timing synchronization signal, transmit the first timing synchronization signal to a display screen corresponding to the master timing generator, and transmit a vertical synchronization signal of the first timing synchronization signal to the slave timing generator; and
the slave timing generator is configured to generate a second timing synchronization signal in response to the vertical synchronization signal transmitted by the master timing generator, and transmit the second timing synchronization signal to a display screen corresponding to the slave timing generator.

2. The system on chip according to claim 1, wherein synchronization control flag bits in the synchronization control register comprise one or more of a synchronization enable flag bit, a timing generator type flag bit, a master timing generator flag bit, a synchronization state switching flag bit, a synchronization alignment flag bit, a synchronization loss flag bit, and a synchronization delay flag bit.

3. The system on chip according to claim 2, wherein the processor core is configured to perform a set operation on the synchronization enable flag bit in a first synchronization control register corresponding to a first timing generator among the timing generators, to enable a display synchronization function of the first timing generator, and perform a set operation on the timing generator type flag bit in the first synchronization control register, to set the first timing generator as the master timing generator; and
the processor core is further configured to perform a set operation on the synchronization enable flag bit in a second synchronization control register corresponding to a second timing generator among the timing generators, to enable a display synchronization function of the second timing generator, and perform a set operation on the timing generator type flag bit in the second synchronization control register, to set the second timing generator as the slave timing generator.

4. The system on chip according to claim 3, wherein the processor core is configured to set a parameter value of a master timing generator flag bit in the second synchronization control register corresponding to the second timing generator to a timing generator identifier corresponding to the first timing generator; and
the second timing generator is configured to generate a second timing synchronization signal in response to the vertical synchronization signal transmitted by the first timing generator, and transmit the second timing synchronization signal to a display screen corresponding to the second timing generator.

5. The system on chip according to any one of claims 2 to 4, wherein the processor core is further configured to set a parameter value of the synchronization delay flag bit in the synchronization control register corresponding to the slave timing generator to a number of synchronization delay lines; and
the slave timing generator is configured to generate the second timing synchronization signal, after delaying the number of synchronization delay lines of horizontal synchronization signals, in response to the vertical synchronization signal transmitted by the master timing generator, and transmit the second timing synchronization signal to the display screen corresponding to the slave timing generator.

6. The system on chip according to any one of claims 2 to 5, wherein the processor core is further configured to perform a set operation on the synchronization state switching flag bit in the synchronization control register corresponding to the slave timing generator, to stop a display synchronization between the slave timing generator and the master timing generator; and
the slave timing generator is configured to generate a third timing synchronization signal, and transmit the third timing synchronization signal to the display screen corresponding to the slave timing generator.

7. The system on chip according to claim 2 or 6, wherein the processor core is further configured to perform a set operation on the synchronization state switching flag bit in the synchronization control register corresponding to the slave timing generator, to restore the display synchronization between the slave timing generator and the master timing generator, perform a set operation on the synchronization alignment flag bit in the synchronization control register, to enable the slave timing generator to perform display synchronization alignment with the master timing generator in a next image frame, and perform a set operation on the synchronization loss flag bit in the synchronization control register, to enable the slave timing generator to output a black frame when the display synchronization with the master timing generator is lost;
the slave timing generator is configured to generate a fourth timing synchronization signal in response to a loss of display synchronization with the master timing generator, and transmit the fourth timing synchronization signal to a display screen corresponding to the slave timing generator; wherein the fourth timing synchronization signal is used to instruct the second display screen to display a black frame; and
the slave timing generator is further configured to generate a second timing synchronization signal in response to the vertical synchronization signal transmitted by the master timing generator in a next image frame, and transmit the second timing synchronization signal to the display screen corresponding to the slave timing generator.

8. A synchronization method for multi-screen display based on a system on chip, **characterized by** comprising:
performing, by a processor core, a write operation on a synchronization control register of a timing generator corresponding to a display screen performing multi-screen display, to enable a display synchronization function of the timing generator, and divide the timing generator into a master timing generator and a slave timing generator;
generating, by the master timing generator, a first timing synchronization signal, transmitting the first timing synchronization signal to a display screen corresponding to the master timing generator, and transmitting a vertical synchronization signal of the first timing synchronization signal to the slave timing generator; and
generating, by the slave timing generator, a second timing synchronization signal in response to the vertical synchronization signal transmitted by the master timing generator, and transmitting the second timing synchronization signal to a display screen corresponding to the slave timing generator.

9. The method according to claim 8, wherein synchronization control flag bits in the synchronization control register comprise one or more of a synchronization enable flag bit, a timing generator type flag bit, a master timing generator flag bit, a synchronization state switching flag bit, a synchronization alignment flag bit, a synchronization loss flag bit, and a synchronization delay flag bit.

10. The method according to claim 9, wherein performing, by a processor core, a write operation on a synchronization control register of a timing generator corresponding to a display screen performing multi-screen display comprises:
performing a set operation on the synchronization enable flag bit in a first synchronization control register corresponding to a first timing generator among the timing generators, to enable a display synchronization function of the first timing generator, and perform a set operation on the timing generator type flag bit in the first synchronization control register, to set the first timing generator as the master timing generator; and
performing a set operation on the synchronization enable flag bit in a second synchronization control register corresponding to a second timing generator among the timing generators, to enable a display synchronization function of the second timing generator, and performing a set operation on the timing generator type flag bit in the second synchronization control register, to set the second timing generator as the slave timing generator.

11. The method according to claim 10, wherein performing a set operation on the timing generator type flag bit in the first synchronization control register, to set the first timing generator as the master timing generator comprises: setting a parameter value of a master timing generator flag bit in the second synchronization control register corresponding to the second timing generator to a timing generator identifier corresponding to the first timing generator; and
wherein generating, by the slave timing generator, a second timing synchronization signal in response to the vertical synchronization signal transmitted by the master timing generator, and transmitting the second timing synchronization signal to a display screen corresponding to the slave timing generator comprises generating a second timing synchronization signal in response to the vertical synchronization signal transmitted by the first timing generator, and transmitting the second timing synchronization signal to a display screen corresponding to the second timing generator.

12. The method according to any one of claims 9 to 11, wherein performing, by a processor core, a write operation on a synchronization control register of a timing generator corresponding to a display screen performing multi-screen display comprises setting a parameter value of the synchronization delay flag bit in the synchronization control register corresponding to the slave timing generator to a number of synchronization delay lines; and
generating, by the slave timing generator, a second timing synchronization signal in response to the vertical synchronization signal transmitted by the master timing generator, and transmitting the second timing synchronization signal to a display screen corresponding to the slave timing generator comprises generating the second timing synchronization signal, after delaying the number of synchronization delay lines of horizontal synchronization signals, in response to the vertical synchronization signal transmitted by the master timing generator, and transmitting the second timing synchronization signal to the display screen corresponding to the slave timing generator.

13. The method according to any one of claims 9 to 12, wherein performing, by a processor core, a write operation on a synchronization control register of a timing generator corresponding to a display screen performing multi-screen display comprises performing a set operation on the synchronization state switching flag bit in the synchronization control register corresponding to the slave timing generator, to stop a display synchronization between the slave timing generator and the master timing generator; and
wherein generating, by the slave timing generator, a second timing synchronization signal in response to the vertical synchronization signal transmitted by the master timing generator, and transmitting the second timing synchronization signal to a display screen corresponding to the slave timing generator comprises generating a third timing synchronization signal, and transmit the third timing synchronization signal to the display screen corresponding to the slave timing generator.

14. An electronic device, **characterized by** comprising a display screen and the system on chip supporting multi-screen display according to any one of claims 1 to 7,
wherein the display screen is configured to perform multi-screen display based on a first timing synchronization signal output from a master timing generator and a second timing synchronization signal output from a slave timing generator in the system on chip.

15. A computer readable storage medium, **characterized by** storing a computer program thereon, which, when executed by a processor, causes the processor to perform the synchronization method for multi-screen display based on a system on chip according to any one of claims 8 to 13.
